# EUROPÄISCHE PATENTSCHRIFT

(11) **EP 2 885 578 B1**
(45) Veröffentlichungstag und Bekanntmachung des Hinweises auf die Patenterteilung: **22.02.2017**
(21) Anmeldenummer: 13762823.6
(22) Anmeldetag: 16.09.2013
(51) Int. Cl.: F22D 11/00, F01K 13/00, F01K 19/00, C02F 1/42, C02F 1/04, F22B 37/48

(54) **VERFAHREN ZUR RÜCKGEWINNUNG VON PROZESSABWÄSSERN EINER DAMPFKRAFTANLAGE**
METHOD FOR RECOVERING PROCESS WASTEWATER FROM A STEAM POWER PLANT
PROCÉDÉ DE RÉCUPÉRATION DES EAUX USÉES D'UN GROUPE VAPEUR

(30) Priorität: 28.09.2012 DE 102012217717
(43) Veröffentlichungstag der Anmeldung: 24.06.2015
(73) Patentinhaber: Siemens Aktiengesellschaft, 80333 München (DE)
(72) Erfinder: SÖLLNER, Anke, 91088 Bubenreuth (DE); GLÜCK, Wolfgang, 91058 Erlangen (DE); FLEISCHMANN, Franziska, 90429 Nürnberg (DE); SATTELBERGER, Marc, 90459 Nürnberg (DE); SPIES, Werner, 69242 Mühlhausen (DE); AMSLINGER, Ute, 86736 Auhausen (DE); WIDMANN, Peter, 91077 Dormitz (DE)
(86) Internationale Anmeldenummer: PCT/EP2013/069095
(87) Internationale Veröffentlichungsnummer: WO 2014/048779

(56) Entgegenhaltungen:
- EP-A1- 0 054 601
- EP-A1- 1 662 096
- EP-B1- 1 706 188
- WO-A1-2005/068905
- WO-A1-2012/066490
- DE-A1- 3 031 454
- DE-B- 1 058 072
- DE-C- 422 862
- US-A- 5 271 215
- US-A1- 2007 289 304
- FTHENAKIS V ET AL: "Life-cycle uses of water in U.S. electricity generation", RENEWABLE AND SUSTAINABLE ENERGY REVIEWS, ELSEVIERS SCIENCE, NEW YORK, NY, US, Bd. 14, Nr. 7, 1. September 2010 (2010-09-01), Seiten 2039-2048, XP027068800, ISSN: 1364-0321, DOI: 10.1016/J.RSER.2010.03.008 [gefunden am 2010-03-16]
- GALLO W L R: "A comparison between the hat cycle and other gas-turbine based cycles: efficiency, specific power and water consumption", ENERGY CONVERSION AND MANAGEMENT, ELSEVIER SCIENCE PUBLISHERS, OXFORD, GB, Bd. 38, Nr. 15-17, 11. Oktober 1997 (1997-10-11), Seiten 1595-1604, XP004100992, ISSN: 0196-8904, DOI: 10.1016/S0196-8904(96)00220-8
- HITZEL H ET AL: "KONDENSATREINIGUNG MIT SEPARATEN KATIONEN- UND ANIONENAUSTAUSCHERN FUER DAS DIREKT LUFTGEKUEHLTE KRAFTWERK MATIMBA DER ESKOM", VGB KRAFTWERKSTECHNIK, VGB KRAFTWERKSTECHNIK GMBH. ESSEN, DE, Bd. 70, Nr. 2, 1. Februar 1990 (1990-02-01), Seiten 138-145, XP000161705, ISSN: 0372-5715

## Beschreibung

Die vorliegende Erfindung betrifft ein Verfahren zum Betrieb einer Dampfkraftanlage mit geschlossenem Wasser-Dampf-Kreislauf und einer Wiederaufbereitungsanlage für Prozesswasser und insbesondere die Wiedergewinnung von Prozesswasser aus Abwasser aus dem Wasser-Dampf-Kreislauf.

Dampfkraftanlagen dienen der Erzeugung elektrischer Energie. Diese können als Dampfkraftwerksanlagen (DKW) ausgestaltet sein, wobei der Dampf über einen fossil befeuerten Kessel erzeugt wird. Eine Dampfkraftwerksanlage umfasst dabei neben dem befeuerten Kessel im Wesentlichen eine Dampfturbine einen Wasser-Dampf-Kreislauf und einen Kondensator.

Ebenso können Dampfkraftanlagen als Gas- und Dampfkraftwerksanlagen (GUD) ausgebildet sein. Derartige Gas- und Dampfkraftwerksanlagen umfassen dabei zumindest eine Gasturbine, einen Wasser-Dampf-Kreislauf, einen Dampferzeuger, eine Dampfturbine, einen Generator und einen Kondensator.

Dampfkraftanlagen können auch als Konzentrierte Sonnenkraftanlagen (Concentrated Solar Power Anlagen - CSP) ausgebildet sein. Derartige Dampfkraftwerksanlagen umfassen dabei zumindest die Sonne als Wärmeproduzent, Öl als Übertragungsmedium, einen Wasser-Dampf-Kreislauf, einen Dampferzeuger, eine Dampfturbine, einen Generator und einen Kondensator.

Als Arbeitsmedium in Dampfkraftanlagen wird deionisiertes Wasser verwendet, welches in dem Dampferzeuger verdampft wird. Der erzeugte Dampf wird in die Dampfturbine geleitet und dort entspannt. Die dabei frei werdende Energie wird über eine Welle auf den Generator übertragen. Der entspannte Dampf wird anschließend einem Kondensator zugeführt, und die flüssige Phase kondensiert.

Zur Unterstützung des Kondensationsprozesses ist an den Kondensator ein Evakuierungssystem angeschossen, welches beim Anfahren der Dampfkraftanlage in dem Kondensator ein Vakuum erzeugt, und dieses während des Betriebs aufrecht hält. Durch das Vakuum wird der Dampfturbinenwirkungsgrad erhöht und nicht kondensierbare Gase aus dem Flüssigkeitsstrom entfernt.

Während des Energieerzeugungsprozesses können dem Arbeitsmedium verschiedene Verunreinigungen eingetragen werden. Zudem werden dem Arbeitsmedium zur Konditionierung oder Reinigung verschiedene Stoffe zugesetzt. Das durch Verunreinigungen oder Zusatzstoffe verunreinigte Arbeitsmedium muss als Prozessabwasser aus dem Wasser-Dampf-Kreislauf ausgeleitet werden, da die Verunreinigungen einer direkten Wiederverwendung als Arbeitsmedium im Wasser-Dampf-Kreislauf entgegen stehen.

Ammoniak dient als Alkalisierungsmittel zur Konditionierung des Speisewassers. Durch die Zugabe von Ammoniak ist eine Erhöhung des pH-Werts des Arbeitsmediums erzielbar, wodurch die relative Korrosionsrate des Speisewassers gesenkt wird. Da der Verteilungskoeffizient von Ammoniak in Flüssigkeiten und Dampf unterschiedlich ist, können in Systemteilen mit Verdampfungs- und Kondensationsprozessen lokal deutlich erhöhte Ammoniakkonzentrationen auftreten (z.B. im Kondensator, im Evakuierungssystem und der Trommelabschlämmung).

Prozessabwässer fallen an verschiedenen Stellen im Wasser-Dampf-Kreislauf an. Das bei der Herstellung des vollentsalztem Wasser in einer Vollentsalzungsanlage anfallende Prozessabwasser ist Regenerierungsabwasser, welches den größten Anteil an verunreinigtem Prozessabwasser ausmacht. Beim An- und Abfahren müssen Fehlbestände (durch Nachspeisen von Arbeitsmedium) und Mehrbestände (durch Ablassen von Arbeitsmedium) des Arbeitsmediums ausgeglichen werden. Des Weiteren entstehen Prozessabwässer durch eine kontinuierliche Probennahme und Leckagen im Wasser-Dampf-Kreislauf. Aufgrund oben genannter Wasserverluste muss der Wasser-Dampfkreislauf kontinuierlich mit vollentsalztem Wasser (Deionat) nachgespeist werden. Durch Rückspül- und Regenerationsprozesse in der Vollentsalzungsanlage und Kondensatreinigung fallen ebenfalls Prozessabwasser an.

Eine beispielhafte Gas- und Dampfkraftwerksanlage mit 400 MW erzeugt jährlich im Grundlastbetrieb Prozessabwasser um die 14.000 Tonnen bei Dampferzeugern mit Durchlaufkessel, und um die 22.000 Tonnen mit Umlaufkessel. Bisher wird ein Großteil dieser Prozessabwässer verworfen.

Ein beispielhaftes fossil befeuertes Dampfkraftwerk mit 2x1050 MW, einem Naturzug-Kühlturm und einer nassen Kalkstein-Rauchgasreinigungsanlage produziert dabei im Grundlastbetrieb sogar bis zu 100.000 Tonnen Prozessabwasser pro Jahr, welches in öffentliche Gewässer ausgeleitet werden muss. Davon entfallen knapp die Hälfte auf den Kühlturm.

Aufgrund immer strenger werdender Umweltgesetze, und für Länder in denen Wasserknappheit herrscht, gewinnt die Reduktion des Wasserverbrauchs und somit die Wiederverwendung von Ab- und Prozesswässern innerhalb des Wasser-Dampf-Kreislaufs zunehmend an Bedeutung. Insbesondere die Richtlinien für die Ausleitung von Abwässern in öffentliche Gewässer werden immer strenger. Daher sollte der Wasserverbrauch einer Dampfkraftanlage soweit wie möglich reduziert werden.

Verunreinigte Prozessabwässer entstehen beispielsweise in den Dampftrommeln einer Gas- und Dampfkraftwerksanlage. Üblicherweise sind mehrere Dampftrommeln auf unterschiedlichem Druckniveaus vorhanden. Die Gas- und Dampfkraftwerksanlage kann auch einen oder mehrere so genannte Durchlaufdampferzeuger, welche auch als Benson-Kessel bezeichnet werden, aufweisen, welche aber zumeist in der Hochdruckstufe eingebunden sind. Aufgrund der Entnahme von Sattdampf aus den Dampftrommeln verbleiben nicht-flüchtige Substanzen in den Dampftrommeln. Diese nichtflüchtigen Verunreinigungen konzentrieren sich in den Dampftrommeln auf, und müssen daher durch Abschlämmen aus dem Kreislauf entfernt werden. Dabei geht dem Kreislauf Wasser verloren, das durch Zusatzwasser, sogenanntes Deionat, wieder ausgeglichen werden muss.

Die EP 1 706 188 B1 beschreibt ein Verfahren zur Rückgewinnung von zumindest einem Teil von Abschlämmwasser aus einer Dampfkraftanlage. Um die Verluste an Energie und Wasser zu verringern, wird das Abschlämmwasser aus der Dampftrommel mit hohem Druckniveau in die Dampftrommel niedrigeren Druckniveaus weiter geleitet und entspannt (sogenanntes Boiler Cascading Blowdown). Nachteilig ist dabei allerdings, dass sämtliche Verunreinigungen von einem Druckniveau zum nachfolgenden weitergegeben werden. Vorgeschlagen wird daher, dass der bei der Wasser-Dampf-Trennung eines hohen Druckniveaus abgetrennte Dampf, einer Dampftrommel eines niedrigeren Druckniveaus zugeführt wird (Advanced Cascading Blowdown). Dies ermöglicht eine gute Energieausnutzung und eine Wiederverwendung von zumindest einem Teil des Dampfes im Wasser-Dampf-Kreislauf. Das verbleibende Abschlämmwasser muss jedoch komplett entsorgt werden.

Weitere Prozessabwässer entstehen durch Entwässerungen. Entwässert wird beispielsweise bei laufendem Betrieb aus länger geschlossenen Rohrleitungen, in denen sich Kondensat angesammelt hat. Dazu werden die betreffenden Rohrleitungen kurz geöffnet und damit entwässert. Dabei geht dem Wasserkreislauf Wasser verloren, das durch Zusatzwasser (Deionat), wieder zugeführt werden muss. Entwässerungen fallen auch besonders vermehrt an beim An- und Abfahren der Dampfkraftanlage, da beispielsweise beim Abfahren der Dampfkraftwerksanlage der im Wasserkreislauf befindliche Dampf nach und nach kondensiert und das so anfallende Flüssigwasser nicht in den Anlagenteilen, insbesondere in den Heizflächen, stehen darf. Beim Abfahren wird aus dem Wasserkreislauf mehr Wasser entwässert als nachgefüllt wird, bis am Ende kein Wasser mehr nachgefüllt wird.

Die EP 1 662 096 A1 und US 7,487,604 B2 beschreiben jeweils ein Verfahren, durch dass es möglich ist, Entwässerungen aus der Dampfkraftanlage wieder zu gewinnen. Die Entwässerungen können gesammelt und zusammen geführt, und auch teilweise kurzzeitig in einem Tank gespeichert werden. Die gespeicherten Entwässerungen werden dann über eine Pumpe in die Umwelt verworfen. Der Tank dient dabei dazu, die Laufzeit und die Intervallhäufigkeit der Pumpe zu reduzieren. Auch kann das entwässerte Wasser in einem Abscheidebehälter entspannt werden, um Wasser und Dampf voneinander zu trennen. Dabei wird der abgetrennte Dampf und das entwässerte Deionat in die Umwelt abgegeben. Es wird daher vorgeschlagen das gesamte entwässerte Wasser aus zumindest einer Druckstufe des Wasser-Dampf-Kreislaufes zu sammeln und zu speichern, und dass das so gesammelte und angespeicherte entwässerte Wasser im Wesentlichen vollständig über eine Wasseraufbereitungsanlage dem Wasserkreislauf zurück zu führen.

Die WO2005068905A1 und die US2007289304A1 beschreiben ein Verfahren zum Betrieb einer Dampfkraftanlage mit einem Wasser-Dampf-Kreislauf, bei dem die anfallenden Prozessabwässer aus dem Wasser-Dampf-Kreislauf entsprechend ihrem jeweiligen Grad an Verunreinigungen in einer Anzahl an Teilwassermengen mit unterschiedlichem Verunreinigungsgrad getrennt gesammelt werden. Die Teilwassermengen werden wiederum miteinander vermischt, damit ein zusammengeführtes Prozessabwasser mit gleichbleibendem Verunreinigungsgrad entsteht, dass einer Abwasseraufbereitungsanlage zugeführt wird.

Aus dem Stand der Technik ist jedoch bislang noch kein Verfahren bekannt, durch dass sich sämtliche Prozessabwässer aus einem Kraftwerk sammeln und wieder weitgehend vollständig im Wasser-Dampf-Kreislauf wieder verwenden lassen.

Aufgabe der Erfindung ist es daher, ein Verfahren zum Betrieb einer Dampfkraftanlage anzugeben, bei der die Belastung der Umwelt durch Prozessabwasser und den Verbrauch von Frischwasser dahingehend minimiert ist, dass nahezu kein Prozessabwasser mehr an die Umwelt abgegeben wird. Weiterhin ist es Aufgabe der Erfindung die laufenden Kosten einer Dampfkraftanlage und eines Kraftwerks zur Erzeugung von elektrischer Energie mit einer solchen Dampfkraftanlage, welche durch die Vollentsalzungsanlage (Deionatbereitstellung) entstehen, zu minimieren.

Die Aufgabe der Erfindung ist gelöst durch die Merkmale des Anspruchs 1. Das Verfahren zum Betrieb einer Dampfkraftanlage umfasst einem Wasser-Dampf-Kreislauf, bei dem alle anfallenden Prozessabwässer aus dem Wasser-Dampf-Kreislauf entsprechend ihrem jeweiligen Grad an Verunreinigung in einer Anzahl an Teilabwassermengen getrennt gesammelt werden. Dabei werden mindestens eine erste Teilabwassermenge mit einem ersten Verunreinigungsgrad und mindestens eine zweite Teilabwassermenge mit einem zweiten Verunreinigungsgrad getrennt gesammelt. Der zweite Verunreinigungsgrad der zweiten Teilabwassermenge ist dabei höher, als der erste Verunreinigungsgrad der ersten Teilabwassermenge. Die erste Teilabwassermenge und die zweite Teilabwassermenge werden anschließend derart miteinander vermischt, dass ein Prozessabwasser entsteht, welches einen weitgehend konstanten Grad an Verunreinigungen aufweist. Dieses Prozessabwasser wird einer Abwasseraufbereitungsanlage zugeführt. Das in der Abwasseraufbereitungsanlage gereinigte Prozessabwasser wird wieder weitgehend vollständig in den Wasser-Dampf-Kreislauf zurück geführt.
Die Abwasseraufbereitungsanlage umfasst dabei einen Verdampfer durch den das Abwasser verdampft wird. Für das Eindampfen der Abwässer gibt es verschiedene Technologien. Durch Verdampfung und Kristallisation werden theoretisch alle gelösten Inhaltsstoffe aus dem Abwasser entfernt. Diese Inhaltsstoffe können anschließend als Feststoff entsorgt werden. Das Destillat ist von hochreiner Qualität und kann in der Dampfkraftanlage wiederverwendet werden. Es erfolgt eine Einleitung des Destillats in den Rohwassertank. Auch stark schadstoffbelasteten Abwässer werden durch die Verdampfung vollständig aufbereitet. Der Rohwasserbedarf und die Abwassermenge der Dampfkraftanlage werden somit gesenkt.

Die Erfindung geht dabei von der Überlegung aus, dass sämtliche Prozessabwässer der Dampfkraftanlage einer Abwasseraufbereitungsanlage zugeführt werden, und die Prozessabwässer dabei vor Einleitung in die Abwasseraufbereitungsanlage derart zu trennen und zu sammeln, dass wenigstens zwei Teilabwassermengen mit unterschiedlichen Graden an Verunreinigungen gebildet werden. Dadurch ist es möglich, dass sämtliche Prozessabwässer aus der Dampfkraftwerksanlage zurück gewonnen werden können.

Erfindungsgemäß ist dabei vorgesehen, dass neben den wenigstens zwei Teilabwassermengen mit verunreinigten Prozessabwässern eine weitere Teilabwassermenge mit sauberen Prozessabwässern gesammelt wird. Als saubere Prozessabwässer sind dabei jene anzusehen, die keine Verunreinigungen, bzw. nur einen geringen zulässigen Grad an Verunreinigungen aufweisen. Saubere Prozessabwässer sind beispielsweise bestimmte Teilwasserströme, die dem Wasser-Dampf-Kreislauf für Messungen entnommen wurden, durch die Messung jedoch nicht beeinträchtigt wurden. Ebenfalls als saubere Prozessabwässer können Entwässerungen betrachtet werden. Das Konditionierungsmittel Ammoniak wird an dieser Stelle nicht als Verunreinigung betrachtet.

Die weitere Teilabwassermenge mit sauberen Prozessabwässern weist nur geringfügige Verunreinigungen (z.B. Eisenpartikel und Ammoniak) auf. Vor der Rückführung in den Wasser-Dampf-Kreislauf müssen diese Prozessabwässer deshalb über die Kondensatreinigungsanlage gereinigt werden.

Die rückgeführten Prozessabwässer müssen unter Umständen erst gekühlt werden. Die Standzeit der Kondensatreinigungsanlage wird durch die höhere Ionenbelastung verringert. Die Menge an Deionat, die durch die Vollentsalzungsanlage bereitgestellt werden muss wird geringer, da weniger Zusatzwasser benötigt wird. Beim Umlaufkessel werden die sauberen und gereinigten Prozessabwässer direkt in dem Tank für demineralisiertes Wasser geleitet werden. Beim Durchlaufkessel werden die Abwässer über die bestehende Kondensatreinigungsanlage in den Wasser-Dampf-Kreislauf geführt.

Durch einen geringeren Wasserbedarf oder eine optimierte Wasseraufbereitung kann auch der Chemikalienverbrauch gesenkt werden, wodurch die Umweltbilanz des Kraftwerks ressourcenschonender gestaltet werden kann.

Durch die Rückführung des in der Abwasseraufbereitungsanlage durch Verdampfung entstehenden Kondensats in die Vollentsalzungsanlage, muss bei dem beispielhaft benannten Dampfkraftwerk (DKW) bis zu 75.200 Tonnen pro Jahr weniger Deionat durch die Vollentsalzungsanlage aufbereitet werden. Davon entfallen ca. 15.000 Tonnen pro Jahr auf die wieder gewinnbaren Prozessabwässer aus der Kesselspülung und das Anfahren, ca. 4.300 Tonnen pro Jahr auf die wieder gewinnbaren Abschlämmungen des Hilfskessels, bis zu 6.000 Tonnen pro Jahr an Prozessabwasser der Probenentnahme, und ca. 50.000 Tonnen pro Jahr auf die Wiedergewinnung von Kondensator.

Die Rückführung erfolgt vorzugsweise über die Demineralisierungsanlage. Durch die Rückführung der gereinigten Prozessabwässer in den Wasser-Dampf-Kreislauf, wird ein geschlossener Kreislauf gebildet. Dies ermöglicht einen Betrieb der Dampfkraftanlage, ohne dass kontinuierlich Rohwasser aus der Umwelt zugeführt, bzw. Prozessabwasser in die Umwelt ausgeleitet werden muss. Somit eignet sich die erfindungsgemäße Dampfkraftanlage insbesondere für Regionen, in denen Wasserknappheit herrscht, bzw. aus Gründen des Umweltschutzes der Eingriff in die Natur minimiert werden muss.

Besonders Vorteilhaft wird die zweite Teilabwassermenge dadurch gebildet, dass ihr ein Prozessabwasser zugeführt wird, welches einer der Dampfkraftanlage umfassenden Demineralisierungsanlage/Vollentsalzungsanlage entnommen wird. Diese Anlagen zur Bereitstellung von demineralisiertem Wasser erzeugen ein Prozessabwasser welches verhältnismäßig stark verunreinigt ist. Zusätzlich kann auch eine Zuführung von Prozessabwasser aus der Kondensatreinigungsanlage in die zweite Teilwassermenge vorgesehen werden. Die zweite Teilabwassermenge wird einem separaten Sammeltank zugeführt und darin gesammelt und zwischengespeichert.

Der ersten Teilabwassermenge wird bevorzugt Prozessabwasser zugeführt, welches einem der Dampfkraftanlage umfassenden Evakuierungssystem entnommen wird und der kontinuierlichen Probenahme aus dem Wasser-Dampf-Kreislauf stammt. Die Prozessabwässer aus dem Evakuierungssystem und der Probenentnahme sind dabei verhältnismäßig gering verunreinigt, enthalten aber Ammoniak. Auch die erste Teilabwassermenge wird einem separaten Sammeltank zugeführt und darin gesammelt und zwischengespeichert. Diese enthält neben Ammoniak auch andere Anionen und Kationen.

Die Abwasseraufbereitungsanlage lässt sich besonders effizient betreiben, wenn die erste Teilabwassermenge und die zweite Teilabwassermenge derart miteinander vermischt werden, sodass der Abwasseraufbereitungsanlage ein zusammengeführtes Prozessabwasser mit weitgehend konstantem Grad an Verunreinigungen zuführbar ist. Das Mischverhältnis wird anhand einer Regelvorrichtung eingestellt. Durch den konstanten Grad an Verunreinigungen wird die Abwasseraufbereitungsanlage gleichmäßig belastet, und kann auf einem weitgehend konstanten Niveau betrieben werden. Die Abwasseraufbereitungsanlage umfasst einen Verdampfer, der mit einem gleichbleibenden Grades an Verunreinigungen betrieben wird.

Der Grad an Verunreinigungen der ersten Teilabwassermenge und der zweiten Teilabwassermenge wird vorzugsweise jeweils durch eine Messung der Leitfähigkeit bestimmt. Diese Messungen können kontinuierlich erfolgen. Die Messergebnisse können dann in Echtzeit von der Regelvorrichtung ausgewertet, und in eine Regelung des Mischverhältnisses umgesetzt werden.

Vorzugsweise umfasst die Abwasseraufbereitungsanlage einen Verdampfer, dem neben dem zusammengeführten Prozessabwasser ein Zusatzstoff zugeführt wird, sodass ein Feststoff, z.B. Ammoniumsulfat, ausgefällt wird. Diese Feststoffe sind in der Düngemittelindustrie weiterverwendbar.

Bei einer weiteren vorteilhaften Ausführungsform der Erfindung umfasst die Dampfkraftanlage weiterhin einen Dampferzeuger, der als Durchlaufkessel ausgebildet ist. Dem Durchlaufkessel ist eine Kondensatreinigungsvorrichtung nachgeschaltet. Die Kondensatreinigungsvorrichtung erzeugt ein Prozessabwasser, welches verhältnismäßig stark verunreinigt ist, und daher vorzugsweise der ersten Teilabwassermenge zugeführt wird.

Im Folgenden wird die Erfindung anhand von Figuren näher erläutert. Darin zeigt:
- FIG 1: Ein Verfahren zum Betrieb einer Dampfkraftanlage mit einem Durchlaufkessel
- FIG 2: Ein Verfahren zum Betrieb einer Dampfkraftanlage mit einem Umlaufkessel

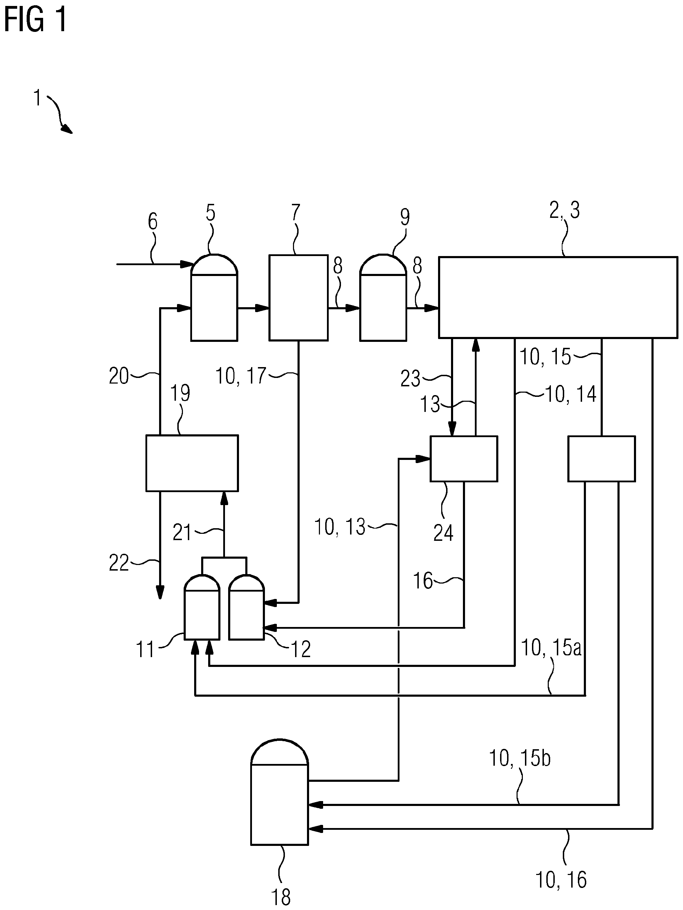

FIG 1 zeigt eine Dampfkraftanlage 1 mit einem Wasser-Dampf-Kreislauf 2. Der Wasser-Dampf-Kreislauf 2 ist hier nur schematisch dargestellt. Der Wasser-Dampf-Kreislauf 2 umfasst einen hier nicht näher dargestellten Durchlaufkessel 3, in dem Dampf erzeugt wird, eine Dampfturbine und einen Kondensator. Zum An- und Abfahren der Dampfkraftanlage 1 weist der Kondensator zudem ein Evakuierungssystem auf, durch das sich ein Vakuum einstellen lässt.

Die Dampfkraftanlage 1 umfasst weiterhin einen Rohwassertank 5, dem über eine Rohwasserleitung 6 Wasser aus einer Frischwasserquelle zugeführt wird. Eine kontinuierliche Nachfüllung an Wasser ist notwendig, da durch Leckagen dem System fortlaufend Wasser verloren geht.

Der Rohwassertank 5 ist über eine Leitung mit einer Demineralisierungsanlage 7 (Vollentsalzungsanlage) verbunden. Die Demineralisierungsanlage 7 umfasst Ionenaustauscher (Ionenaustauscherharze), durch die das Rohwasser aus dem Rohwassertank 5 entsalzt wird, wobei ein demineralisiertes Wasser 8 entsteht. Neben dem demineralisierten Wasser 8 entsteht ein Prozessabwasser 10 in Form von Regenerierungsabwasser 17. Das demineralisierte Wasser 8 wird in einen Tank 9 zwischengespeichert und anschließend in den Wasser-Dampf-Kreislauf 2 überführt.

In dem Wasser-Dampf-Kreislauf 2 wird das demineralisierte Wasser 8 in dem Durchlaufkessel verdampft, in der Dampfturbine entspannt, und in dem Kondensator mithilfe des Evakuierungssystems wieder kondensiert.

An dem Wasser-Dampf-Kreislauf 2 werden kontinuierlich Prozessabwässer 15 in Form von Proben entnommen. Durch Messungen wird ein verschmutzte Prozessabwasser 15a und ein sauberes Prozessabwasser 15b gebildet. Insgesamt verlassen den Wasser-Dampf-Kreislauf 2 saubere und verschmutzte Prozessabwässer 10.

Zu den verschmutzen Prozessabwässern 10 zählen die Prozessabwässer 14 aus dem Evakuierungssystem und die verschmutzten Prozessabwässer 15a aus der Probenentnahme.

Das Prozessabwasser 15b, aus der Probenentnahme, ist ein sauberes Prozessabwasser und wird mit Prozessabwasser 10 in einen Sammeltank 18 für saubere Prozessabwässer geleitet, und bildet eine Teilabwassermenge mit sauberen Prozessabwässern 13. Diese Teilabwassermenge mit sauberen Prozessabwässern 13 wird über eine Kondensatreinigung 24 in den Wasser-Dampf-Kreislauf zurück geführt.

Das Prozessabwasser 14 aus dem Evakuierungssystem ist verhältnismäßig stark verschmutzt, ebenso wie das Prozessabwasser 15a der belasteten Probenentnahme. Die Prozessabwässer 14 und 15a werden in einem ersten Sammeltank zusammengeführt und bilden eine erste Teilwassermenge 11. Das Prozessabwasser 17 aus der Demineralisationsanlage 7 und das Regenerierungsabwasser 16 aus der Kondensatreinigungseinrichtung 24 werden einem zweiten Sammeltank zugeführt und bildet eine zweite Teilwassermenge 12.

Die Prozessabwässer aus der ersten Teilwassermenge 11 und der zweiten Teilwassermenge 12 werden nun ausgeleitet und miteinander vermischt, sodass ein zusammengeführtes Prozessabwasser 21 entsteht, welches einer Abwasseraufbereitungsanlage 19 zugeführt wird. Das Mischverhältnis wird dabei im Betrieb der Dampfkraftanlage fortlaufend angepasst. Ziel der Anpassung ist es, dass selbst bei schwankenden Graden an Verunreinigungen der ersten Teilwassermenge 11 und/oder der zweiten Teilwassermenge 12, durch eine Anpassung des Mischverhältnisses ein zusammengeführtes Prozessabwasser 21 erzielt wird, dessen Verunreinigungsgrad weitgehend konstant ist. Dadurch kann die Abwasseraufbereitungsanlage 19 konstant betrieben werden. Der Verunreinigungsgrad der Teilwassermengen wird dabei durch Leitfähigkeitsmessungen ermittelt.

Die Abwasseraufbereitungsanlage 19 umfasst einen Verdampfer, in dem das zusammengeführte Prozessabwasser 21 verdampft wird. Durch Kondensation des Dampfes wird dann ein gereinigtes Prozessabwasser 20 gebildet, welches wieder in den Rohwassertank 5 ausgeleitet wird, und somit auch wieder dem Wasser-Dampf-Kreislauf zur Verfügung gestellt wird. Durch die Kondensation von gereinigtem Prozessabwasser 20 entsteht in der Abwasseraufbereitungsanlage 19 ein fester Rückstand 22, der im Wesentlichen Ammoniumsulfat umfasst. Dieser wird ausgeleitet und kann einer weiteren Verwendung zugeführt werden.

Die Teilabwassermenge 12 besteht bei einem Umlaufkessel nur aus dem Regenerierungsabwasser 17 der Demineralisierungsanlage 7.

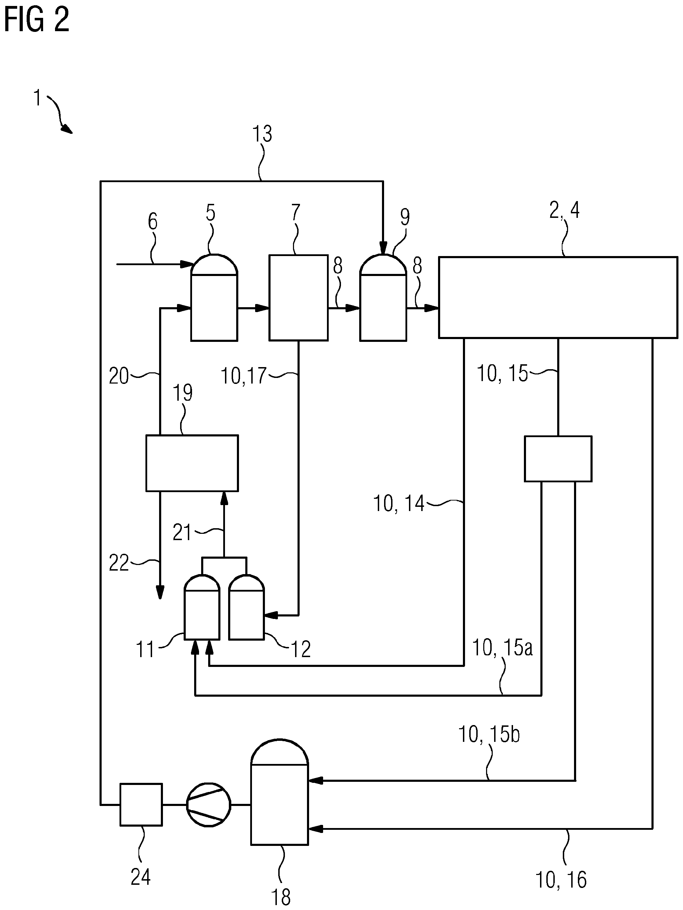

FIG 2 zeigt die Dampfkraftanlage aus FIG 1, jedoch umfasst der Wasser-Dampf-Kreislauf 2 keinen Durchlaufkessel, sondern einen hier nur schematisch dargestellten Umlaufkessel 4. Weiterhin umfasst die Dampfkraftanlage 1 der FIG 2 eine Kondensatreinigungsvorrichtung 24.

Bei dem Durchlaufkessel 3 wird Kondensat 23 einer Kondensatreinigungseinrichtung 24 zugeführt.

In den zweiten Sammeltank werden die Prozessabwässer 17 aus der Demineralisierungsanlage 7 und die Regenerierabwässer aus der Kondensatreinigungsvorrichtung 24 geleitet und bilden die zweite Teilwassermenge 12.

Die saubere Teilabwassermenge 13 wird über die Kondensatreinigungsvorrichtung 24 gereinigt und in den Wasser Dampfkreislauf 2 zurückgeführt.

Durch die Erfindung ist es möglich, dass die Mengen an Abwasser, welches an die Umwelt abgegeben werden, minimiert werden können. Dadurch muss der Dampfkraftanlage weniger Frischwasser zusätzlich zugeführt werden, wodurch auch weniger Arbeitsmedium aufbereitet werden muss.

## Patentansprüche

1. Verfahren zum Betrieb einer Dampfkraftanlage (1) mit einem Wasser-Dampf-Kreislauf (2), bei dem alle anfallenden Prozessabwässer (10) aus dem Wasser-Dampf-Kreislauf (2) entsprechend ihrem jeweiligen Grad an Verunreinigung in einer Anzahl an Teilabwassermengen getrennt gesammelt werden, wobei mindestens eine erste Teilabwassermenge (11) mit einem ersten Verunreinigungsgrad, und mindestens eine zweite Teilabwassermenge (12) mit einem zweiten Verunreinigungsgrad gebildet werden, wobei der zweite Verunreinigungsgrad höher ist als der erste Verunreinigungsgrad,
**dadurch gekennzeichnet, dass**
die erste Teilabwassermenge (11) und die zweite Teilabwassermenge (12) derart miteinander vermischt werden, dass ein zusammengeführtes Prozessabwasser (21) mit einem weitgehend konstantem Grad an Verunreinigungen gebildet wird, welches einer Abwasseraufbereitungsanlage (19) zugeführt wird, und das in der Abwasseraufbereitungsanlage (19) gereinigte Prozessabwasser (20) wieder weitgehend vollständig in den Wasser-Dampf-Kreislauf (2) zurückgeführt wird.

2. Verfahren nach Anspruch 1, wobei der zweiten Teilabwassermenge (12) ein Prozessabwasser (17) zugeführt wird, welches einer der Dampfkraftanlage (1) umfassenden Vollentsalzungsanlage (7) entnommen wird.

3. Verfahren nach einem der Ansprüche 1 oder 2, wobei der ersten Teilabwassermenge (11) ein Prozessabwasser (10) zugeführt wird, welches einem den Wasser-Dampf-Kreislauf (2) umfassenden Evakuierungssystem (14) entnommen wird und aus einer dem Wasser-Dampf-Kreislauf (2) entnommenen Wasserprobe (15) stammt.

4. Verfahren nach einem der Ansprüche 1 bis 3, wobei der Grad an Verunreinigungen der ersten Teilabwassermenge (11) und der zweiten Teilabwassermenge (12) jeweils durch eine Messung der Leitfähigkeit bestimmt wird.

5. Verfahren nach einem der Ansprüche 1 bis 4, wobei die Abwasseraufbereitungsanlage (19) einen Verdampfer umfasst, der für einen weitgehenden kontinuierlichen Betrieb ausgelegt ist.

6. Verfahren nach einem der Ansprüche 1 bis 5, wobei weiterhin eine Teilabwassermenge (13) mit sauberen Prozessabwässern getrennt gesammelt wird, welches dem Wasser-Dampf-Kreislauf (2) umfassenden Kondensator entnommen wird und/oder aus einer dem Wasser-Dampf-Kreislauf (2) entnommenen Wasserprobe (15b) stammt.

7. Verfahren nach einem der Ansprüche 1 bis 6, **dadurch gekennzeichnet, dass** die Dampfkraftanlage (1) einen Dampferzeuger umfasst, der als Durchlaufkessel (3) ausgebildet ist, wobei der zweiten Teilabwassermenge (12) ein Prozessabwasser (10) zugeführt wird, welches einer dem Durchlaufkessel (3) umfassenden Kondensatreinigungsvorrichtung (24) entnommen wird.

8. Verfahren nach einem der Ansprüche 1 bis 6, **dadurch gekennzeichnet, dass** die Dampfkraftanlage einen Dampferzeuger umfasst, der als Umlaufkessel (4) ausgebildet ist.

## Claims

1. Method for operating a steam power plant (1) with a water-steam circuit (2), in which all process wastewaters (10) arising are collected separately from the water-steam circuit (2) in accordance with the respective degree of contamination thereof in a number of wastewater sub-volumes, wherein at least a first wastewater sub-volume (11) with a first degree of contamination and at least a second wastewater sub-volume (12) with a second degree of contamination are formed, wherein the second degree of contamination is higher than the first degree of contamination,
**characterized in that**
the first wastewater sub-volume (11) and the second wastewater sub-volume (12) are mixed together in such a way that a combined process wastewater (21) with a largely constant degree of contamination arises, which is fed to a wastewater treatment plant (19) and **in that** the process wastewater (20) purified in the wastewater treatment plant (19) is largely completely recirculated into the water-steam circuit (2).

2. Method according to Claim 1, wherein a process wastewater (17) is fed to the second wastewater sub-volume (12) which is taken from a deionization plant (7) comprised by the steam power plant (1).

3. Method according to one of Claims 1 or 2, wherein a process wastewater (10) is fed to the first wastewater sub-volume (11) which is taken from an evacuation system (14) comprised by the water-steam circuit (2) and originates from a water sample (15) taken from the water-steam circuit (2).

4. Method according to one of Claims 1 to 3, wherein the degree of contamination of the first wastewater sub-volume (11) and the second wastewater sub-volume (12) is determined in each case by measuring conductivity.

5. Method according to one of Claims 1 to 4, wherein the wastewater treatment plant (19) comprises an evaporator, which is designed for largely continuous operation.

6. Method according to one of Claims 1 to 5, wherein furthermore a wastewater sub-volume (13) with clean process wastewaters is separately collected which is taken from the condenser comprised by the water-steam circuit (2) and/or originates from a water sample (15b) taken from the water-steam circuit (2).

7. Method according to one of Claims 1 to 6, **characterized in that** the steam power plant (1) comprises a steam generator, which takes the form of a once-through boiler (3), wherein a process wastewater (10) is fed to the second wastewater sub-volume (12) which is taken from a condensate purification device (24) comprised by the once-through boiler (3).

8. Method according to one of Claims 1 to 6, **characterized in that** the steam power plant comprises a steam generator, which takes the form of a circulating boiler (4).

## Revendications

1. Procédé pour faire fonctionner une centrale (1) à vapeur ayant un circuit (2) eau-vapeur, dans lequel on recueille du circuit (2) eau-vapeur, séparée conformément à son degré respectif d'impureté en un nombre de sous-quantités d'eau résiduaire, toute l'eau (10) résiduaire qui se produit dans le processus, dans lequel on forme au moins une première sous-quantité (11) d'eau résiduaire ayant un premier degré d'impureté et au moins une deuxième sous-quantité (12) d'eau résiduaire ayant un deuxième degré d'impureté, le deuxième degré d'impureté étant plus grand que le premier degré d'impureté,
**caractérisé en ce que**
on mélange, l'une à l'autre, la première sous-quantité (11) d'eau résiduaire et la deuxième sous-quantité (12) d'eau résiduaire de manière à former une eau résiduaire (21) de processus réunie ayant un degré d'impuretés sensiblement constant, que l'on envoie à une installation (19) de retraitement d'eau résiduaire et on retourne sensiblement complètement au circuit (2) eau-vapeur l'eau résiduaire (20) de processus épurée dans l'installation (19) de retraitement de l'eau résiduaire.

2. Procédé suivant la revendication 1, dans lequel on envoie à la deuxième sous-quantité (12) d'eau résiduaire une eau résiduaire (17) de processus, que l'on prélève d'une installation (7) de déminéralisation comprise dans la centrale (1) à vapeur.

3. Procédé suivant l'une des revendications 1 ou 2, dans lequel on envoie à la première sous-quantité (11) d'eau résiduaire une eau résiduaire (10) de processus, que l'on prélève d'un système (14) de mise sous vide comprenant le circuit (2) eau-vapeur et provenant d'un échantillon (15) d'eau prélevée du circuit (2) eau-vapeur.

4. Procédé suivant l'une des revendications 1 à 3, dans lequel on détermine le degré d'impureté de la première sous-quantité (11) d'eau résiduaire et de la deuxième sous-quantité (12) d'eau résiduaire respectivement par une mesure de la conductivité.

5. Procédé suivant l'une des revendications 1 à 4, dans lequel l'installation (19) de retraitement d'eau résiduaire comprend un évaporateur conçu pour un fonctionnement essentiellement continu.

6. Procédé suivant l'une des revendications 1 à 5, dans lequel on recueille séparément, en outre, une sous-quantité (13) d'eau résiduaire ayant des eaux résiduaires de processus propres, que l'on prélève d'un condenseur comprenant le circuit (2) vapeur-eau et/ou qui provient d'un échantillon (15b) d'eau prélevée du circuit (2) eau-vapeur.

7. Procédé suivant l'une des revendications 1 à 6, **caractérisé en ce que** la centrale (1) à vapeur comprend un générateur de vapeur constitué sous la forme d'une chaudière (3) à passage continu dans lequel on envoie, à la deuxième sous-quantité (12) d'eau résiduaire, une eau résiduaire (10) de processus, qui est prélevée d'une installation (24) d'épuration de produit condensé comprenant la chaudière (3) à passage continu.

8. Procédé suivant l'une des revendications 1 à 6, **caractérisé en ce que** la centrale à vapeur comprend un générateur de vapeur constitué en chaudière (4) à passage continu.
